Europäisches Patentamt

European Patent Office

Office européen des brevets

(19)

(11) Publication number : **0 208 152**
**B1**

(12) **EUROPEAN PATENT SPECIFICATION**

(45) Date of publication of patent specification :
07.03.90

(21) Application number : 86107776.6

(22) Date of filing : 07.06.86

(51) Int. Cl.⁵ : **B 60 Q   1/30**

(54) Structure of a reflecting plate for heavy-duty motor vehicles, in general.

(30) Priority : 12.06.85 IT 2215785 U

(43) Date of publication of application :
14.01.87 Bulletin 87/03

(45) Publication of the grant of the patent :
07.03.90 Bulletin 90/10

(84) Designated contracting states :
AT BE CH DE FR GB LI LU NL SE

(56) References cited :
FR—A— 2 436 693

(73) Proprietor : SACEX S.p.A.
Via Privata delle Industrie 10
I-20054 Nova Milanese (Milano) (IT)

(72) Inventor : Bellu', Mario
Via Parini 23
I-20038 Seregno Milan (IT)

(74) Representative : Modiano, Guido et al
MODIANO, JOSIF, PISANTY & STAUB Modiano &
Associati Via Meravigli, 16
I-20123 Milano (IT)

Jouve, 18, rue St-Denis, 75001 Paris, France

## Description

This invention relates to a structure of a reflecting plate for heavy-duty motor vehicles in general.

As is known, regulations in some countries foresee, for heavy-duty motor vehicles, the use of reflecting plates, having pre-established dimensions and shapes, for installation on the outer surface of the motor vehicle.

Such plates usually comprise, in a common embodiment thereof, a support element to which a plate-shaped element is attached on which the catadioptric sections and fluorescent sections are placed in an arrangement which generally envisages assembling inclined and alternate sections.

With prior solutions, as a rule, such catadioptric sections and fluorescent sections are made by means of self-adhesive layers which are purposely prepared and glued on the support element side-by-side.

Other known solutions, such as put forward by French Patent FR-A2-2,436,693, are disclosing an assembly of alternating catadioptric and fluorescent sections welded (with ultrasound) to a support plate. The above solutions are creating problems for obtaining an accurate assembly of the various zones ; besides a major drawback of the adhesive coupled layers is possible separation of said layers from their support caused by water infiltration.

Another drawback is then represented by the fact that, according to regulations currently in force, the catadioptric sections and fluorescent sections must be replaced after different periods of use, so that with conventional solutions, properly detaching the layers from the support element is very difficult, and it is generally necessary to arrange for replacement of the whole plate, after a time period which corresponds to the lesser period of use of the layers.

Another drawback ascribed to the prior art solutions is the necessity to arrange for sections of different shape so as to obtain the conformations required by law.

The aim of this invention is that of solving the above-outlined problems by providing a structure of a reflecting plate for heavy-duty motor vehicles in general, wherein there is the possibility of effecting the assembly of the various catadioptric and fluorescent sections without being compelled to resort to the adoption of gluing materials, while having also the advantage of a more reliable and stable coupling.

Another object of this invention is to provide a structure of a reflecting plate wherein replacement of the parts may be effected quickly and simply, without encountering any problem for effecting the assembly.

Still another object of this invention is to provide a structure of a plate wherein the various conformations required by law are obtainable by using elements having a single conformation, which are mutually assembled one another.

A further object of this invention is to provide a structure of a plate which is strong mechanically and, moreover, capable of giving full assurance of being reliable and safe in use.

Not a least object of this invention is to provide a structure of a reflecting plate which is readily obtainable from commonly available materials on the market and which, moreover, is competitive from the economical standpoint.

The above aim, the objects outlined and others to become apparent hereinafter, are achieved by a structure of a reflecting plate for heavy-duty motor vehicles in general, according to the invention, comprising a support element attachable to a heavy-duty motor vehicle in general, characterised in that it comprises a plurality of polygonal catadioptric plates and a plurality of polygonal fluorescent plates removably insertable in said support element and mutually assemblable one another.

Further features and advantages will be more apparent from the detailed description of a structure of a reflecting plate for heavy-duty motor vehicles in general, given by way of illustration and not of limitation, as shown in the accompanying drawings, where :

Figure 1 shows schematically a perspective view of the support element ;

Figure 2 shows the polygonal catadioptric plate ;

Figure 3 shows the polygonal fluorescent plate ;

Figure 4 shows, in front elevation, the assembling of the various plates on the support element ;

Figure 5 shows a section along the line V-V of Figure 4 ;

Figure 6, 7 and 8 show schematically different conformations obtainable for the plates ;

Figure 9 shows a support element for plates with a fluorescent frame ;

Figures 10 and 11 show two different plates with fluorescent frames.

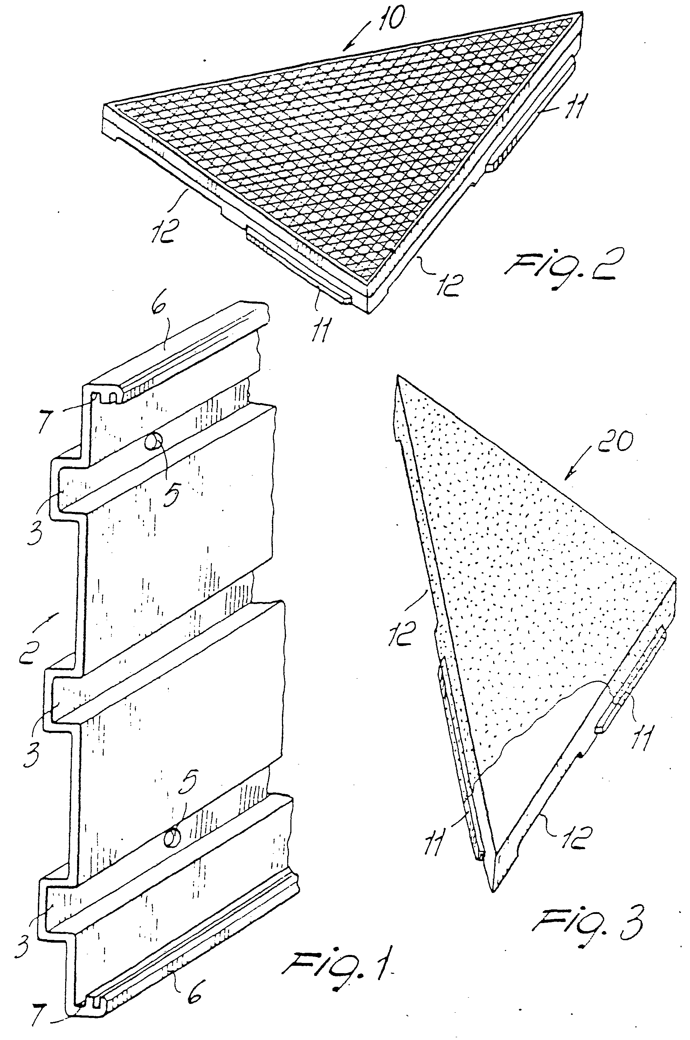

With reference to the cited figures, the structure of a reflecting plate for heavy-duty motor vehicles in general, which is generally indicated by the reference numeral 1, comprises a support element 2 which is advantageously obtained by means of an aluminium sectional member which defines, in its central portion, depressed channels 3 for stiffening and defining the holes 5 for securing the support element to the body or anyhow to the exterior of the heavy-duty motor vehicle.

The support element 2 has longitudinal edges 6 which define a coupling track or guide 7.

The peculiarity of the invention resides in that it comprises a plurality of polygonal catadioptric plates 10 which have advantageously an isosceles right angled triangle conformation, which are provided on the sides with coupling means consisting of male insertion elements 11 and female insertion elements 12 correspondingly arranged, so as to obtain mutual assembly among the various triangles which can be mounted on each other.

Moreover, polygonal fluorescent plates, are provided, generally indicated by the reference numeral 20, which have a conformation substantially equal to the conformation of the plates 10, with the difference that instead of the catadioptric layer they have their exposed surface made fluorescent by the application of two coatings of a fluorescent paint on which is further applied a coating forming a UV filter.

The plates 20 also have male insertion elements and female insertion members, like the plates 10.

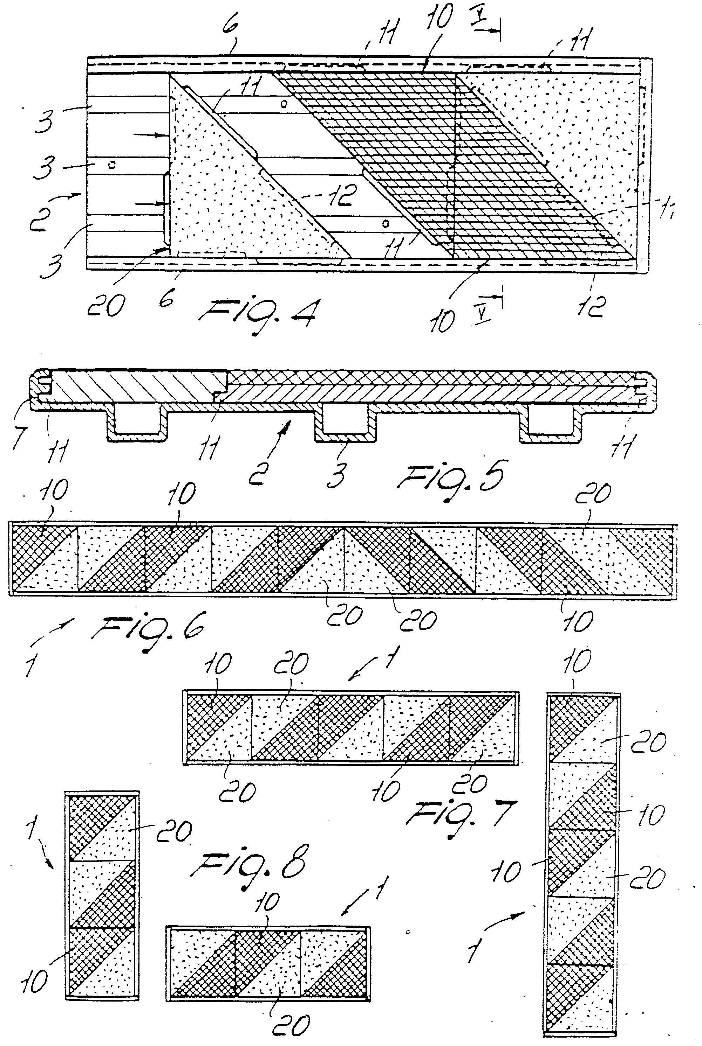

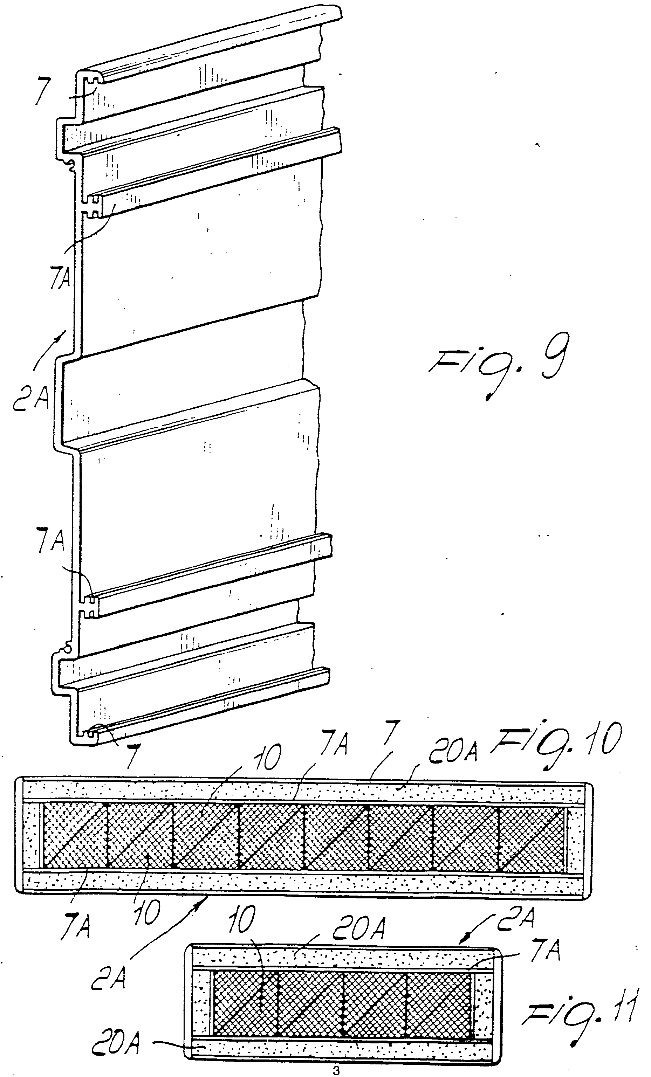

Using plates of triangular conformation affords, as schematically indicated in Figures 4 to 8, the obtainment of inclined strip conformations, by joining together two triangular plates along a cathetus, thus obtaning the sought inclinations.

The inclination is obviously obtainable in both directions according to requirements.

Furthermore on the major side, consisting of the hypotenuse, the various strip zones are associable to the major sides of the plates forming the different strips, thus obtaining the sought intercalation of strips and it being possible to form with one piece all the desired conformations, including the triangular zone which is defined at the corners and possibly at the central portions.

With reference to Figures 9, 10 and 11 there is provided a support element 2A which defines intermediate tracks 7A, similar in construction to the tracks or guides 7 which afford the possibility of making plates with a fluorescent frame encircling a catadioptric zone.

The catadioptric zone is obtainable with the plates 10, whilst for making the fluorescent frame there are provided elongate fluorescent plates 20A which are insertable between the tracks or guides 7 and 7A.

Of particular importance is the fact that the various plates are removably insertable into the support element, with the possibility of replacing quickly and simply any damaged plate without creating problems as regards mutual assembling and without being compelled to replace the whole plate. Furthermore providing male insertion elements and female insertion elements on each side of the polygonal plates allows the obtainment of a joint between the various plates which greatly contributes toward an increased mechanical strength of the plates themselves.

From the foregoing description it may be seen that the invention achieves the objects set forth and in particular it is pointed out that no self-adhesive layers are used which could be easily removable, and moreover, the reflecting surfaces, consisting of the catadioptric surfaces and fluorescent surfaces, are both firmly attached to a rigid support consisting of the various plates, thereby obtaining long life in use.

Of particular importance is also the fact that the fluorescent plates have their fluorescent layer formed by painting, thus contributing toward improved operability of the plates themselves.

In practice the materials used so long as compatible with the specific use and the contingent shapes may be any one according to requirements.

## Claims

1. A structure of a reflecting plate for heavy-duty motor vehicles in general, comprising a support element (2) attachable to said heavy-duty vehicle in general, said structure further comprising a plurality of polygonal catadioptric plates (10) and a plurality of polygonal fluorescent plates (20, 20A), characterized in that said catadioptric plates (10) and said fluorescent plates (20, 20A) are removably insertable into said support element (2) being mutually assembled to one other.

2. A structure of a reflecting plate for heavy-duty motor vehicles in general, according to claim 1, characterized in that said polygonal plates (10, 20) have a substantially triangular isosceles right angled triangle configuration.

3. A structure of a reflecting plate for heavy-duty motor vehicles in general, according to claims 1-2, characterized in that said plates (10, 20) are provided at their sides with means for mutual coupling (11, 12).

4. A structure of a reflecting plate for heavy-duty motor vehicles in general, according to claims 1-3, characterized in that said means for mutual coupling comprise male insertion elements (11) and female insertion elements (12) intercalated with one another and correspondingly provided on each side.

5. A structure of a reflecting plate for heavy-duty motor vehicles in general, according to claims 1-4, characterized in that said male insertion elements (11) and female insertion elements (12) are mutually assemblable between polygonal plates (10, 20) arranged side-by-side.

6. A structure of a reflecting plate for heavy-duty motor vehicles in general, according to claims 1-5, characterized in that said support element (2) defines on the longitudinal edges (6) a track (7) wherein said male insertion element (11) is removably insertable.

7. A structure of a reflecting plate for heavy-duty motor vehicles in general, according to claims 1-6, characterized in that said support element (2A) comprises intermediate tracks (7A) delimiting in cooperation with said tracks (7) a frame zone for accomodating elongate fluorescent plates (20A).

8. A structure of a reflecting plate for heavy-duty motor vehicles in general, according to claims 1-7, characterized in that said plurality of polygonal fluorescent plates (20) and elongate fluorescent plates (20A) has on its exposed surface a fluorescent layer obtained by application of two coatings of a fluorescent paint and one coating forming a UV filter.

## Patentansprüche

1. Reflektorplatte für Motorschwerfahrzeuge im allgemeinen, mit einem am Schwerfahrzeug im allgemeinen anbringbaren Halteelement (2), welche Reflektorplatte weiters eine Vielzahl von vieleckigen katadioptrischen Platten (10) und eine Vielzahl von vieleckigen fluoreszierenden Platten (20, 20A) aufweist, dadurch gekennzeichnet, daß die katadioptrischen Platten (10) und die fluoreszierenden Platten (20, 20A) abnehmbar in das Halteelement (2) einsetzbar und gegenseitig aneinandergefügt sind.

2. Reflektorplatte für Motorschwerfahrzeuge im allgemeinen nach Anspruch 1, dadurch gekennzeichnet, daß die vieleckigen Platten (10, 20) die Form eines im wesentlichen gleichenkeligen rechtwinkeligen Dreieckes besitzen.

3. Reflektorplatte für Motorschwerfahrzeuge im allgemeinen nach den Ansprüchen 1-2, dadurch gekennzeichnet, daß die Platten (10, 20) an ihren Seiten mit Einrichtungen für den gegenseitigen Anschluß (11, 12) versehen sind.

4. Reflektorplatte für Motorschwerfahrzeuge im allgemeinen nach den Ansprüchen 1-3, dadurch gekennzeichnet, daß die Einrichtungen für den gegenseitigen Anschluß aus Einsteckelementen (11) und Aufnahmeelementen (12) bestehen, die ineinandergefügt und in entsprechender Weise an jeder Seite vorgesehen sind.

5. Reflektorplatte für Motorschwerfahrzeuge im allgemeinen nach den Ansprüchen 1-4, dadurch gekennzeichnet, daß die Einsteckelemente (11) und die Aufnahmeelemente (12) gegenseitig zwischen Seite an Seite angeordneten, vieleckigen Platten (10, 20) aneinanderfügbar sind.

6. Reflektorplatte für Motorschwerfahrzeuge im allgemeinen nach den Ansprüchen 1-5, dadurch gekennzeichnet, daß das Halteelement (2) an den Längsrändern (6) eine Spur (7) definiert, in welche das Einsteckelement (11) entnehmbar einsetzbar ist.

7. Reflektorplatte für Motorschwerfahrzeuge im allgemeinen nach den Ansprüchen 1-6, dadurch gekennzeichnet, daß das Halteelement (2A) Zwischenspuren (7A) besitzt, welche in Zusammenwirkung mit den Spuren (7) eine Rahmenzone für die Aufnahme langgestreckter fluoreszierender Platten (20A) bilden.

8. Reflektorplatte für Motorschwerfahrzeuge im allgemeinen nach den Ansprüchen 1-7, dadurch gekennzeichnet, daß die Vielzahl vieleckiger fluoreszierender Platten (20) und langgestreckter fluoreszierender Platten (20A) auf ihren freiliegenden Flächen eine fluoreszierende Schicht aufweisen, die durch Aufbringung von zwei Schichten eines fluoreszierenden Anstrichs und einer ein UV-Filter bildenden Schicht erhalten wurden.

**Revendications**

1. Structure de plaque réfléchissante pour véhicule du type poids lourd, comprenant un élément de support (2) qui peut être fixé au véhicule du type poids lourd, la structure comprenant en outre une pluralité de plaques catadioptriques polygonales (10) et une pluralité de plaques fluorescentes polygonales (20, 20A), caractérisée en ce que les plaques catadioptriques (10) et les plaques fluorescentes (20, 20A) peuvent être insérées de manière amovible dans l'élément de support (2) en étant assemblées les unes aux autres.

2. Structure de plaque réfléchissante pour véhicule du type poids lourd selon la revendication 1, caractérisée en ce que les plaques polygonales (10, 20) ont une configuration triangulaire, sensiblement de triangle isocèle à angle droit.

3. Structure de plaque réfléchissante pour véhicule du type poids lourd selon la revendication 1 ou 2, caractérisée en ce que les plaques (10, 20) sont munies sur leurs côtés de moyens d'accouplement mutuel (11, 12).

4. Structure de plaque réfléchissante pour véhicule du type poids lourd selon l'une des revendications 1 à 3, caractérisée en ce que les moyens d'accouplement mutuel comprennent des éléments d'insertion mâles (11) et des éléments d'insertion femelles (12) intercalés les uns avec les autres, et prévus de manières correspondantes sur chaque côté.

5. Structure de plaque réfléchissante pour véhicule du type poids lourd selon l'une des revendications 1 à 4, caractérisée en ce que les éléments d'insertion mâles (11) et les éléments d'insertion femelles (12) sont mutuellement assemblables entre des plaques polygonales (10, 20) disposées côté-à-côte.

6. Structure de plaque réfléchissante pour véhicule du type poids lourd selon l'une des revendications 1 à 5, caractérisée en ce que l'élément de support (2) définit sur les bords longitudinaux (6) une glissière (7) dans laquelle l'élément d'insertion mâle (11) peut être inséré de manière amovible.

7. Structure de plaque réfléchissante pour véhicule du type poids lourd selon l'une des revendications 1 à 6, caractérisée en ce que l'élément de support (2A) comprend des glissières intermédiaires (7A) qui délimitent, conjointement avec les glissières (7), une zone encadrée pour recevoir des plaques fluorescentes oblongues (20A).

8. Structure de plaque réfléchissante pour véhicule du type poids lourd selon l'une des revendications 1 à 7, caractérisée en ce que la pluralité précitée de plaques fluorescentes polygonales (20) et de plaques fluorescentes oblongues (20A) possède, sur sa surface exposée, un revêtement fluorescent obtenu par l'application de deux couches d'une peinte fluorescente et d'une couche formant un filtre contre les rayons ultraviolets.

Fig.2

Fig.1

Fig.3

Fig. 4

Fig. 5

Fig. 6

Fig. 7

Fig. 8

2

Fig. 9

Fig. 10

Fig. 11